# EUROPÄISCHE PATENTSCHRIFT

(11) **EP 3 549 497 B1**
(45) Veröffentlichungstag und Bekanntmachung des Hinweises auf die Patenterteilung: **06.04.2022**
(21) Anmeldenummer: 19161113.6
(22) Anmeldetag: 06.03.2019
(51) Int. Cl.: A47J 43/28, A47J 47/00

(54) **KÄSEHALTERSET**
CHEESE HOLDER SET
KIT SUPPORT POUR FROMAGE

(30) Priorität: 03.04.2018 DE 202018101805 U
(43) Veröffentlichungstag der Anmeldung: 09.10.2019
(73) Patentinhaber: Kolf, Andrea, 49809 Lingen (DE)
(72) Erfinder: Kolf, Andrea, 49809 Lingen (DE)
(74) Vertreter: Deters, Frank

(56) Entgegenhaltungen:
- US-A- 1 952 644
- US-A1- 2012 227 593
- Anonymous: "feuer stelle - Käsehalter aus Holz", , 4. Mai 2016 (2016-05-04), XP055587608, Gefunden im Internet: URL:http://www.feuer-stelle.ch/feuerstelle n/kasehalter [gefunden am 2019-05-10]

## Beschreibung

Die Erfindung betrifft Mittel zur manuellen Fixierung von Käsestücken oder dergleichen stückigen Lebensmitteln wie Salami oder Brot, etwa um das Abtrennen eines Teils davon wie einer Käsescheibe zu ermöglichen. Beispielsweise bei Nutzung eines Käseschneiders ist eine Fixierung des Käsestückes insofern notwendig, als dass es ansonsten der durch den Käseschneider einzuleitenden Kraft ausweichen würde und dadurch kein sauberer Schnitt zustande käme.

Ein Festhalten des Käsestückes ohne Hilfsmittel und somit ein unmittelbarer Kontakt von Käsestück und einer Hand eines Benutzer ist zum einen aus hygienischen Gründen zu vermeiden und zum anderen nimmt die Hand des Benutzers den Geruch des Käses an, was mitunter als unangenehm empfunden wird.

Aus der NL 1 032 078 ist ein taschenförmiger Käsehalter bekannt, welcher den Käse bei der Benutzung von zumindest drei Seiten umgibt. Dabei liegt der Käse innerhalb des taschenförmigen Käsehalters. Der Benutzer umfasst den Käsehalter mit einer Hand und übt zur Fixierung des Käsestücks von zwei gegenüberliegenden Seiten dessen eine Kraft darauf aus. Bei einer ausreichenden Kraft und damit Fixierung des Käsestücks kann ein aus dem Käsehalter überstehender Teil mit einem Messer in oder anderen Hand des Benutzers abgeschnitten werden, wobei das Käsestück mit seiner Rückseite am Käsehalter anliegt.

Nachteilig bei derartigen Käsehaltern ist, dass der Käsehalter ob seiner Geometrie auf eine Anwendung für Käsestücke bestimmter Größen beschränkt ist. Sobald der aus dem Käsehalter überstehende Teil des Käsestücks abgeschnitten ist, ist der weitere Teil nicht ohne weiteres erreichbar. Des Weiteren ist durch die Geometrie des Käsehalters eine maximale Breite bzw. Dicke des Käsestückes vorgegeben, da bei Überschreitung dieser der Käsehalter das Käsestück nicht mehr von zwei gegenüberliegenden Seiten umgeben kann, was zur ausreichenden Fixierung nötig ist.

Eine weitere Vorrichtung zum Halten von Nahrungsmitteln ist aus der US 1952644 A bekannt.

Aufgabe der vorliegenden Erfindung ist die Bereitstellung von Mitteln zur Fixierung von Käse, welche bei einer kompakten Bauweise flexibel anwendbar sind.

Diese Aufgabe wird erfindungsgemäß durch ein Set aus zumindest zwei Käsehaltern gelöst, die jeweils ein Griffelement und zumindest ein Abrutschschutzelement haben. Das Griffelement weist eine zumindest teilweise in einer Anlageebene angeordnete Anlagefläche auf, die in einer Benutzungsposition des Käsehalters an einem Käsestück anliegt. Außerdem weist das Griffelement zumindest eine von der Anlagefläche abgewandte Grifffläche zum Greifen des Käsehalters in der Benutzungsposition auf. Das Abrutschschutzelement ist derart am Griffelement angeordnet, dass es sich in der Benutzungsposition vom Käsestück weg erstreckt, so dass es einem Abrutschen von der Grifffläche entgegenwirkt. Das Griffelement hat dabei eine parallel zur Anlageebene gemessene maximale Breite von 15 mm bis 50 mm, insbesondere von 28 mm bis 33 mm. Außerdem hat das Griffelement eine parallel zur Anlageebene und senkrecht zur Breite gemessene maximale Länge von 25 mm bis 70 mm, insbesondere von 42 mm bis 47 mm. Am Griffelement ist zumindest ein sich um 4 mm bis 15 mm, insbesondere um 7 mm bis 12 mm, von der Anlagefläche erstreckendes Dornelement angeordnet.

In der Benutzungsposition der Käsehalter des Sets liegen diese jeweils mit ihrer Anlagefläche an gegenüberliegenden Seiten des Käsestücks an, wobei eine Oberfläche des Käsestücks zumindest teilweise in den jeweiligen Anlageebenen liegen. Auf der der Anlagefläche gegenüberliegenden Seite des Griffelementes ist die Grifffläche angeordnet, an welche in der Benutzungsposition ein oder zwei Finger des Benutzers des Sets anzulegen sind. Dadurch können die Käsehalter mit einer quer zur Anlageebene gerichteten Kraft an das Käsestück angedrückt und dieses so fixiert werden.

Das Abrutschschutzelement hat zumindest abschnittsweise einen größeren Abstand von der Anlageebene als das Griffelement und ist dazu ausgebildet, in der Benutzungsposition zumindest teilweise an den Fingerspitzen des Benutzers anzuliegen. Insbesondere ist das Abrutschschutzelement an einer gegenüber einer Längsseite schmaleren Breitseite des Griffelementes angeordnet. In der Benutzungsposition ist das Abrutschschutzelement bevorzugt dem Teil des Käsestücks zugewandt, welcher abzuschneiden ist.

Das am Griffelement angeordnete Dornelement erstreckt sich in der Benutzungsposition in das Käsestück. Es ist relativ zum Abrutschschutzelement auf der gegenüberliegenden Seite der Anlageebene angeordnet, wobei die Seiten die beiden an die Anlageebene angrenzenden und davon getrennten Räume sind. Das Dornelement hat eine längliche Erstreckung in eine Richtung, die mit der Anlageebene einen Winkel ungleich 0 einschließt. Das in das Käsestück eingedrungene Dornelement hält den jeweiligen Käsehalter bei ausbleibendem Kontakt durch den Benutzer dennoch in der Benutzungsposition.

Durch die Verwendung des Sets aus zwei separaten Käsehaltern sind diese unabhängig von der Größe des Käsestücks an zwei gegenüberliegenden Seiten dessen positionierbar und verbleiben durch die in das Käsestück eingedrungenen Dornelemente in der Benutzungsposition, auch wenn durch den Benutzer keine Kraft auf die Käsehalter ausgeübt wird. Somit ist das Set unabhängig von den Ausmaßen, insbesondere von der Dicke, des Käsestücks besonders einfach anwendbar.

Durch das Abrutschschutzelement wird ermöglicht, beim Schneiden des Käsestücks, das eine Schneidekraft erfordert, eine dazu nötige Gegenhaltekraft auf das Käsestück aufzubringen. Diese geht insbesondere über die Kraft, welche reibschlüssig durch die Finger auf die Käsehalter aufgebracht werden kann, hinaus. Unabhängig davon wird der Benutzer bei der Benutzung davor geschützt, von der Grifffläche abzurutschen. Somit sind auch etwa besonders harte Käsestücke, welche zum Schneiden eine besonders hohe Schneidekraft und damit auch Gegenkraft erfordern, durch das Set einfacher zu bearbeiten. Außerdem wird eine Verletzungsgefahr für die auf der Grifffläche befindlichen Finger durch die Schneide im Falle eines Abrutschens derer verringert.

Die parallel zur Anlageebene gemessenen Ausmaße des Griffelementes ermöglichen eine flexible Anwendbarkeit des Sets insofern, als dass die Käsehalter eine Erstreckung haben, welche über die, die zur zuverlässigen Kraftübertragung auf sie notwendig ist, vorzugsweise nicht hinausgehen. Insbesondere die bevorzugten, engeren Wertebereiche für die maximale Breite und die maximale Länge ermöglichen sowohl für die Anlagefläche als auch für die Grifffläche eine Größe, welche zum einen die Erzeugung einer für das Schneiden ausreichenden Gegenkraft zuverlässig ermöglicht und zum anderen so klein ist, dass Käsestücke unterschiedlichster Ausmaße weitestgehend unter Anwendung des Sets zerkleinert werden können. Des Weiteren sind die Käsehalter und damit das gesamte Set an sich besonders kompakt.

Die Grifffläche ist innerhalb eines gedachten Raumes angeordnet, welcher sich von der Anlageebene rechtwinklig dazu um 5 mm, insbesondere um 1,7 mm, erstreckt. Der gedachte Raum ist dabei nicht Teil der Erfindung. Durch einen derart geringen Abstand der Grifffläche von der Anlageebene ist ein zuverlässiges Greifen des Griffelementes in der Benutzungsposition insofern erleichtert, als dass ein Verkippen des Griffelementes relativ zur Anlageebene verhindert wird und je nach Spannweite der Hand des Benutzers auch besonders dicke Käsestücke zwischen den Käsehaltern Platz finden. Insbesondere sind die Käsehalter in dieser besonders flachen Ausbildung außerdem besonders kompakt.

Das Abrutschschutzelement erstreckt sich über den gedachten Raum hinaus. Dadurch wird zum einen die Kompaktheit der Käsehalter weitgehend beibehalten und zum anderen der Anwendungsumfang des Sets insofern erweitert, als dass auch höhere Gegenkräfte, welche zum Schneiden besonders harter Käsesorten nötig sind, auf die Käsehalter und somit das Käsestück übertragen werden können. Das Abrutschschutzelement erstreckt sich um 5 mm bis 20 mm, bevorzugt um 10 mm bis 12 mm, über den gedachten Raum hinaus. Durch diese Erstreckung ist ein optimales Gleichgewicht zwischen einer kompakten Bauweise der Käsehalter auf der einen Seite und einem breiten Umfang an mit den Käsehaltern zu bearbeitenden Käsesorten mit insbesondere großen Härten und damit erforderlichen Gegenkräften sowie einen zuverlässigen Schutz des Benutzers beim Schneiden des Käsestücks ermöglicht.

Bevorzugt ist die Grifffläche derart ausgebildet, dass ihre Form mit derjenigen einer darauf abzulegenden Fingerkuppe zumindest teilweise korrespondiert. Alternativ oder ergänzend wird die Grifffläche vorzugsweise durch ein rutschfestes Material wie Gummi ausgebildet. Vorteil ist jeweils ein reduziertes Risiko eines Abrutschens der Finger sowie die Möglichkeit der Übertragung einer größeren Gegenkraft, welche wiederum die Verarbeitung besonders harter Käsesorten erleichtert.

Mit Vorteil erstreckt sich die Grifffläche parallel zur Anlageebene. Durch diese ebene Ausgestaltung der Grifffläche ist das Griffelement wiederum besonders kompakt. Ergänzend oder alternativ dazu ist bevorzugt die Anlagefläche eben, was wiederum das von den Käsehaltern bzw. einem Raum innerhalb ihrer Umhüllenden beanspruchte Volumen weiter reduziert und die Anwendung des Sets auf besonders dicke Käsestücke erlaubt.

In einer vorteilhaften Ausgestaltung der Erfindung weist das Abrutschschutzelement eine Abrutschschutzfläche auf, welche zumindest abschnittsweise mit der Anlageebene einen Winkel von wenigstens 30° und insbesondere wenigstens 80° einschließt. Dabei ist die Abrutschschutzfläche derjenige Teil der Oberfläche des Abrutschschutzelementes, welcher dem an dem jeweiligen Käsehalter anliegenden Finger bzw. den Fingern zugewandt ist. Durch den möglichst großen Winkel zumindest eines Abschnitts der Abrutschschutzfläche relativ zur Anlageebene ist bevorzugt erreicht, dass eine parallel zur Anlageebene gerichtete Kraft in besonders großem Umfang vom Benutzer auf die Käsehalter insbesondere formschlüssig übertragen wird, da diese zumindest zu einem großen Anteil unmittelbar senkrecht zur Abrutschschutzfläche auf das Abrutschschutzelement einwirkt. Das Risiko eines Abrutschens während der Kraftübertragung ist dabei reduziert. Vorteil dieser Ausgestaltung ist die Möglichkeit des Haltens auch besonders schwerer Käsestücke, bei denen sowohl eine Gegenkraft zum Schneiden derer als auch weitere Kraft zur Aufnahme ihrer Gewichtskraft notwendig ist.

Vorzugsweise weist jeder der Käsehalter zumindest zwei Dornelemente auf. Durch eine Mehrzahl an Dornelementen lassen sich die Käsehalter besonders zuverlässig am Käsestück positionieren und die Wahrscheinlichkeit eines unbeabsichtigten Lösens derer aus der Benutzungsposition verringern. Insbesondere ermöglicht eine Mehrzahl an Dornelementen die Anwendung des Sets auch bei weichen Käsesorten, bei denen ein erhöhtes Risiko des Lösens der Käsehalter aus der Benutzungsposition besteht. Weiterer Vorteil einer Mehrzahl von Dornelementen ist, dass dadurch eine Rotation der Käsehalter in der Benutzungsposition, relativ zum Käsestück, auch dann vermieden wird, wenn die Dornelemente eine rotationssymmetrische Form haben, welche wiederum der Kompaktheit der Käsehalter zugutekommt. Besonders bevorzugt hat jeder Käsehalter genau zwei Dornelemente. Dadurch sind zum einen die genannten Vorteile einer Mehrzahl an Dornelementen erreicht und zum anderen eine dabei maximale Kompaktheit der Käsehalter erreicht.

Bevorzugt sind die Dornelemente aus einer Perspektive aus Richtung des Abrutschschutzelementes hintereinander am Griffelement angeordnet und erstrecken sich jeweils von einer gedachten in der Anlageebene liegenden Achse aus. Diese erstreckt sich vorzugsweise parallel zu der Richtung, in welche die maximale Länge des Griffelementes gemessen wird. Durch diese Anordnung der Dornelemente wird die Anwendung des Sets bei Käsestücken erleichtert, welche eine geringere Breite haben als das Griffelement, da trotz der geringen Größe alle Dornelemente zur Fixierung der Käsehalter und zur Übertragung einer Kraft effektiv verwendet werden können.

Besonders bevorzugt hat das zumindest eine Dornelement in der Anlageebene und damit im Bereich seines Dornelementansatzes eine Dicke von 1 mm bis 6 mm, insbesondere von 2 mm bis 4 mm. Durch diese Form des Dornelementes hat dieses eine größtmögliche Stabilität und es wird auch bei harten Käsesorten ein Abbrechen des Dornelementes vom Griffelement zuverlässig vermieden.

In einer vorteilhaften Ausgestaltung der Erfindung weist das zumindest eine Dornelement eine Längsmittelachse auf, die mit der Anlageebene einen Winkel von zumindest 70°, insbesondere von 90°, einschließt. Die Längsmittelachse des Dornelementes verläuft dabei von der Anlageebene bis zur Spitze des Dornelementes durch dieses hindurch und ist insbesondere auch dessen Symmetrieachse. Durch einen möglichst großen Winkel zwischen Längsmittelachse und Anlageebene wird ermöglicht, durch die Käsehalter weitgehend richtungsunabhängig eine Kraft auf das Käsestück zu übertragen. Insbesondere bei einem solchen Winkel von 90° wird durch das Dornelement eine Gegenkraft in alle parallel zur Anlageebene ausgerichteten Richtungen gleichwertig erzeugt, was insbesondere das Schneiden des Käsestücks in unterschiedliche Richtungen zulässt.

Mit Vorteil hat zumindest ein Dornelement vom Abrutschschutzelement einen Abstand von höchstens 10 mm, insbesondere von höchstens 5 mm. Insbesondere schließt sich das Abrutschschutzelement dabei unmittelbar an die in der Anlageebene angeordnete Anlagefläche an. Alternativ oder ergänzend schließt sich das Abrutschschutzelement bevorzugt an die sich insbesondere parallel zur Anlageebene erstreckende Grifffläche an. Vorzugsweise sind das Griffelement und das Abrutschschutzelement durch eine zur Anlageebene rechtwinklige Trennebene getrennt. Vorteil des kurzen Abstandes ist, dass das Set und insbesondere das zumindest eine Dornelement auch dann noch effektiv angewendet werden können, wenn das Käsestück bzw. insbesondere die an den Käsehaltern anliegende Oberfläche dessen besonders klein ist. So kann ein dem Abrutschschutzelement gegenüberliegender Teil des Griffelementes über das Käsestück überstehen, ohne dass das den Effekt des zumindest einen Dornelementes einschränkt. Gleichzeitig erfüllt dabei auch das Abrutschschutzelement seinen Zweck.

Bevorzugt ist jeder der Käsehalter einstückig ausgebildet. Dadurch sind diese besonders stabil und durch die Abwesenheit etwaiger weiterer Befestigungselemente besonders kompakt.

Besonders bevorzugt ist jeder der Käsehalter überwiegend, insbesondere ausschließlich, aus Kunststoff, Edelstahl, Edelmetall, Zirkon oder Holz ausgebildet. Dabei ist der Kunststoff ein lebensmittelechter Kunststoff und das Zirkon insbesondere gesintertes Zirkon. Durch diese Ausbildung sind die Käsehalter steril und insbesondere geruchsresistent und leicht zu reinigen, wodurch sie auch bei unterschiedlichsten Käsesorten angewendet werden können.

Weitere Einzelheiten und Vorteile der Erfindung sind den nachfolgend beschriebenen, schematisch dargestellten Ausführungsbeispielen zu entnehmen; es zeigen:
- Fig. 1: eine Draufsicht in eine Längsrichtung auf einen Käsehalter eines erfindungsgemäßen Sets,
- Fig. 2: eine Draufsicht in eine Querrichtung auf den Käsehalter gemäß Fig. 1,
- Fig. 3: eine Draufsicht aus einer Richtung senkrecht zur Anlageebene auf den Käsehalter gemäß der Fig. 1 und 2.

Die nachfolgend erläuterten Merkmale des erfindungsgemäßen Ausführungsbeispiels können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

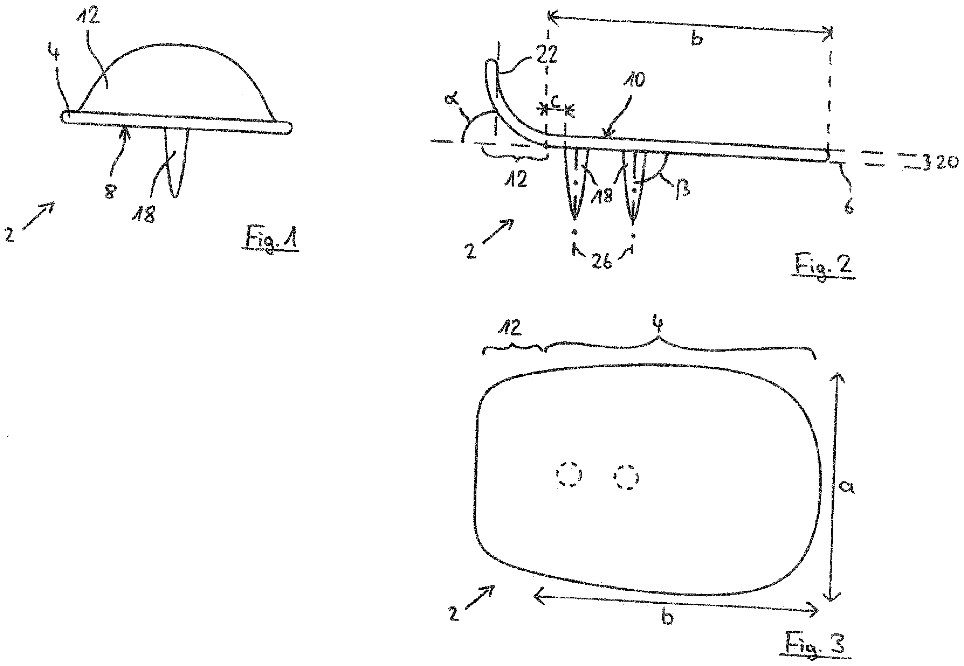

Die Fig. 1 und 2 zeigen einen Käsehalter 2 mit einem Griffelement 4 und zumindest einem Abrutschschutzelement 12. Das Griffelement 4 weist eine zumindest teilweise in einer Anlageebene 6 angeordnete und in einer Benutzungsposition des Käsehalters 2 an einem Käsestück anliegende Anlagefläche 8 sowie eine davon abgewandte Grifffläche 10 zum Greifen des Käsehalters 2 in der Benutzungsposition auf. Das Abrutschschutzelement 12 ist derart am Griffelement 4 angeordnet, dass es sich in der Benutzungsposition vom Käsestück einem Abrutschen von der Grifffläche 10 entgegenwirkend wegerstreckt. Das Griffelement 4 hat eine parallel zur Anlageebene 6 gemessene maximale Breite a von 15 mm bis 50 mm, insbesondere von 28 mm bis 33 mm (vergl. Fig. 1) und eine parallel zur Anlageebene 6 und senkrecht zur Breite a gemessene maximale Länge b von 25 mm bis 70 mm, insbesondere von 42 mm bis 47 mm (vergl. Fig. 2). Am Griffelement 4 sind zwei sich um 4 mm bis 15 mm, insbesondere um 7 mm bis 12 mm, von der Anlagefläche 6 erstreckende Dornelemente 18 angeordnet.

Die Grifffläche 10 ist innerhalb eines gedachten Raumes 20 angeordnet, welcher sich von der Anlageebene 6 rechtwinklig dazu um 5 mm, insbesondere um 1,7 mm, erstreckt (vergl. Fig. 2). Die Grifffläche 10 ist dabei parallel zur Anlageebene 6 erstreckt. Das Abrutschschutzelement 12 erstreckt sich insbesondere um 5 mm bis 20 mm, bevorzugt um 10 mm bis 12 mm, über den gedachten Raum 20 hinaus.

Das Abrutschschutzelement 12 hat eine Abrutschschutzfläche 22, welche zumindest abschnittsweise mit der Anlageebene 6 einen Winkel α von wenigstens 30°, insbesondere von wenigstens 80°, einschließt (vergl. Fig. 2).

Die Fig. 2 und 3 zeigen, dass jeder der Käsehalter 2 zumindest zwei rotationssymmetrische Dornelemente 18 aufweist. Diese haben eine Längsmittelachse 26, die mit der Anlageebene 6 einen Winkel β von 90° einschließt. Eines der Dornelemente 18 hat vom Abrutschschutzelement 12 einen Abstand c von höchstens 10 mm, insbesondere von höchstens 5 mm.

Der gezeigte Käsehalter 2 ist einstückig ausgebildet.

## Patentansprüche

1. Set aus zwei Käsehaltern (2), die jeweils ein Griffelement (4), welches eine zumindest teilweise in einer Anlageebene (6) angeordnete und in einer Benutzungsposition des Käsehalters (2) an einem Käsestück anliegende Anlagefläche (8) sowie zumindest eine davon abgewandte Grifffläche (10) zum Greifen des Käsehalters (2) in der Benutzungsposition aufweist, die innerhalb eines gedachten Raumes (20) angeordnet ist, welcher sich von der Anlageebene (6) rechtwinklig dazu um 5 mm, erstreckt,
wobei die Grifffläche (10) sich insbesondere parallel zur Anlageebene (6) erstreckt und zumindest ein Abrutschschutzelement (12) haben, welches derart am Griffelement (4) angeordnet ist, dass es sich in der Benutzungsposition vom Käsestück einem Abrutschen von der Grifffläche (10) entgegenwirkend wegerstreckt, um 5 bis 20 mm, bevorzugt um 10 bis 12 mm über den gedachten Raum (20) hinaus erstreckt, wobei das Griffelement (4) eine parallel zur Anlageebene (6) gemessene maximale Breite (a) von 15 mm bis 50 mm, insbesondere von 28 mm bis 33 mm und eine parallel zur Anlageebene (6) und senkrecht zur Breite (a) gemessene maximale Länge (b) von 25 mm bis 70 mm, insbesondere von 42 mm bis 47 mm hat und am Griffelement (4) zumindest ein sich um 4 mm bis 15 mm, insbesondere um 7 mm bis 12 mm von der Anlagefläche (8) erstreckendes Dornelement (18) angeordnet ist.

2. Set nach einem der vorhergehenden Ansprüche, **dadurch gekennzeichnet, dass** das Abrutschschutzelement (12) eine Abrutschschutzfläche (22) aufweist, welche zumindest abschnittsweise mit der Anlageebene (6) einen Winkel (a) von wenigstens 30°, insbesondere von wenigstens 80° einschließt.

3. Set nach einem der vorhergehenden Ansprüche, **dadurch gekennzeichnet, dass** jeder der Käsehalter (2) zumindest zwei Dornelemente (18) aufweist.

4. Set nach einem der vorhergehenden Ansprüche, **dadurch gekennzeichnet, dass** das zumindest eine Dornelement (18) eine Längsmittelachse (26) aufweist, die mit der Anlageebene (6) einen Winkel (β) von zumindest 70°, insbesondere von 90° einschließt.

5. Set nach einem der vorhergehenden Ansprüche, **dadurch gekennzeichnet, dass** zumindest ein Dornelement (18) vom Abrutschschutzelement (12) einen Abstand (c) von höchstens 10 mm, insbesondere von höchstens 5 mm hat.

6. Set nach einem der vorhergehenden Ansprüche, **dadurch gekennzeichnet, dass** jeder der Käsehalter (2) einstückig ausgebildet ist.

7. Set nach einem der vorhergehenden Ansprüche, **dadurch gekennzeichnet, dass** jeder der Käsehalter (2) überwiegend, insbesondere ausschließlich aus Kunststoff, Edelmetall, Edelstahl, Zirkon oder Holz ausgebildet ist.

## Claims

1. Set of two cheese holders (2) each having a grip element (4), which has an abutment surface (8), which is at least partially arranged in an abutment plane (6) and, in a use position of the cheese holder (2), butts against a piece of cheese, and also has at least one grip surface (10), which is directed away from the abutment surface, is intended for gripping the cheese holder (2) in the use position and is arranged within an imaginary space (20) extending by 5 mm from the abutment plane (6), at right angles thereto, wherein the grip surface (10) extends, in particular, parallel to the abutment plane (6), and also each having at least one slip-guard element (12), which is arranged on the grip element (4) such that, in the use position, it extends away from the piece of cheese, counteracting any possibility of the latter slipping from the grip surface (10), and extends by 5 to 20 mm, preferably by 10 to 12 mm, beyond the imaginary space (20), wherein the grip element (4) has a maximum width (a), measured parallel to the abutment plane (6), of 15 mm to 50 mm, in particular of 28 mm to 33 mm, and a maximum length (b), measured parallel to the abutment plane (6) and perpendicularly to the width (a), of 25 mm to 70 mm, in particular of 42 mm to 47 mm, and the grip element (4) has arranged on it at least one spike element (18), which extends by 4 mm to 15 mm, in particular by 7 mm to 12 mm, from the abutment surface (8).

2. Set according to one of the preceding claims, **characterized in that** the slip-guard element (12) has a slip-guard surface (22), which, at least to some extent, encloses an angle (a) of at least 30°, in particular of at least 80°, with the abutment plane (6).

3. Set according to either of the preceding claims, **characterized in that** each of the cheese holders (2) has at least two spike elements (18).

4. Set according to one of the preceding claims, **characterised in that** the at least one spike element (18) has a longitudinal centre axis (26), which encloses an angle (β) of at least 70°, in particular of 90°, with the abutment plane (6).

5. Set according to one of the preceding claims, **characterized in that** at least one spike element (18) is at a distance (c) of at most 10 mm, in particular of at most 5 mm, from the slip-guard element (12).

6. Set according to one of the preceding claims, **characterized in that** each of the cheese holders (2) is formed in one piece.

7. Set according to one of the preceding claims, **characterized in that** each of the cheese holders (2) is formed predominantly, in particular exclusively, from plastic, precious metal, stainless steel, zirconium or wood.

## Revendications

1. Ensemble de deux supports de fromage (2), qui présentent chacun un élément de préhension (4), lequel présente une surface d'appui (8) agencée au moins partiellement dans un plan d'appui (6) et reposant sur un morceau de fromage dans une position d'utilisation du support de fromage (2), ainsi qu'au moins une surface de préhension (10) détournée de celle-ci pour saisir le support de fromage (2) dans la position d'utilisation, qui est agencée à l'intérieur d'un espace imaginaire (20) qui s'étend à partir du plan d'appui (6), à angle droit de celui-ci, sur 5 mm,
la surface de préhension (10) s'étendant notamment parallèlement au plan d'appui (6) et ayant au moins un élément de protection contre le glissement (12), qui est agencé sur l'élément de préhension (4) de telle sorte que, dans la position d'utilisation, il s'étend à partir du morceau de fromage en s'opposant à un glissement de la surface de préhension (10), il s'étend de 5 à 20 mm, de préférence de 10 à 12 mm, au-delà de l'espace imaginaire (20), l'élément de préhension (4) ayant une largeur maximale (a), mesurée parallèlement au plan d'appui (6), de 15 mm à 50 mm, notamment de 28 mm à 33 mm, et une longueur maximale (b), mesurée parallèlement au plan d'appui (6) et perpendiculairement à la largeur (a), de 25 mm à 70 mm, notamment de 42 mm à 47 mm, et au moins un élément de mandrin (18) s'étendant de 4 mm à 15 mm, notamment de 7 mm à 12 mm, à partir de la surface d'appui (8) étant agencé sur l'élément de préhension (4).

2. Ensemble selon l'une quelconque des revendications précédentes, **caractérisé en ce que** l'élément de protection contre le glissement (12) présente une surface de protection contre le glissement (22) qui forme, au moins en sections, un angle (α) d'au moins 30°, notamment d'au moins 80°, avec le plan d'appui (6) .

3. Ensemble selon l'une quelconque des revendications précédentes, **caractérisé en ce que** chacun des supports de fromage (2) présente au moins deux éléments de mandrin (18).

4. Ensemble selon l'une quelconque des revendications précédentes, **caractérisé en ce que** l'au moins un élément de mandrin (18) présente un axe central longitudinal (26), qui forme avec le plan d'appui (6) un angle (β) d'au moins 70°, notamment de 90°.

5. Ensemble selon l'une quelconque des revendications précédentes, **caractérisé en ce qu'**au moins un élément de mandrin (18) a une distance (c) par rapport à l'élément de protection contre le glissement (12) d'au plus 10 mm, notamment d'au plus 5 mm.

6. Ensemble selon l'une quelconque des revendications précédentes, **caractérisé en ce que** chacun des supports de fromage (2) est configuré d'un seul tenant.

7. Ensemble selon l'une quelconque des revendications précédentes, **caractérisé en ce que** chacun des supports de fromage (2) est configuré principalement, notamment exclusivement, en matière plastique, en métal noble, en acier inoxydable, en zirconium ou en bois.
